**Europäisches Patentamt**

**European Patent Office**

**Office européen des brevets**

(11) Veröffentlichungsnummer: **0 230 940**
**A2**

## (12) EUROPÄISCHE PATENTANMELDUNG

(21) Anmeldenummer: **87100588.0**

(22) Anmeldetag: **17.01.87**

(51) Int. Cl.⁴: **F24F 3/153**

The title of the invention has been amended (Guidelines for Examination in the EPO, A-III, 7.3).

(30) Priorität: **22.01.86 DE 3601816**

(43) Veröffentlichungstag der Anmeldung:
**05.08.87 Patentblatt 87/32**

(84) Benannte Vertragsstaaten:
**AT BE CH DE ES FR LI LU NL**

(71) Anmelder: **Pressluft-Frantz GmbH**
**Flinschstrasse 45**
**D-6000 Frankfurt am Main 60(DE)**

(72) Erfinder: **Engelke, Peter c/o KEIL &**
**SCHAAFHAUSEN**
**Patentanwälte Ammelburgstrasse 34**
**D-6000 Frankfurt am Main 1(DE)**

(74) Vertreter: **Keil, Rainer A., Dipl.-Phys. Dr. et al**
**Patentanwälte KEIL & SCHAAFHAUSEN**
**Ammelburgstrasse 34**
**D-6000 Frankfurt am Main 1(DE)**

(54) **Luftkompressor mit entfeuchtungseinrichtung.**

(57) Die Erfindung bezieht sich auf einen luftgekühlten, insbesondere fahrbaren Kompressor mit integrierter Druckluftbeaufschlagung, mit einem Verdichter, insbesondere einem Schraubenverdichter, und mit einem Antriebsaggregat, insbesondere einem Dieselmotor, für den Verdichter, wobei erfindungsgemäß ein luftgekühlter mit einem Kondensatabscheider versehener Nachkühler im Druckluftstrom angeordnet ist, um die Druckluft von der Verdichtungsendtemperatur am Nachkühlereintritt auf eine Temperatur von etwa 10° C über Ansaugtemperatur abzukühlen und wobei dem Nachkühler ein Wärmetauscher zum Nachwärmen der Druckluft nachgeordnet ist, welcher auf der Abluftseite im Abgasbereich des Antriebsaggregates liegt.

FIG.1

## Luftgekühlter, insbesondere fahrbarer Kompressor

Die Erfindung bezieht sich auf einen luftgekühlten, insbesondere fahrbaren Kompressor mit integrierter Druckluftaufbereitung, mit einem Verdichter, insbesonder einem Schraubenverdichter, und mit einem Antriebsaggregat, insbesondere einem Dieselmotor, für den Verdichter.

Bei derartigen, beispielsweise im Baugewerbe eingesetzten luftgekühlten Kompressoren ist die Druckluftqualität hinsichtlich des Feuchtigkeitsgehaltes als zu naß zu bezeichnen. Infolge dessen können sich beim Betrieb von Druckluftwerkzeugen durch das anfallende Kondensat bedingte Funktionsstörungen ergeben. So fallen beispielsweise bei einer 10-cbm-Schraubenverdichteranlage pro Tag, je nach herrschender Luftfeuchtigkeit, rund 30 l Wasser an. Bereits ab 10° C Ansaugtemperatur kann es durch den Temperaturabfall der sich entspannenden Luft zu einer Vereisung der Werkzeuge kommen. Das Wasser behindert in den Werkzeugen auch die notwendige Schmierung. Erhöhter Verschleiß und Materialdefekte sind die Folge.

Der Erfindung liegt daher die Aufgabe zugrunde, einen luftgekühlten Kompressor der eingangs genannten Art zu schaffen, bei dem die Druckluft hinsichtlich des Feuchtigkeitsgehaltes verbessert ist.

Diese Aufgabe wird erfindungsgemäß dadurch gelöst, daß ein luftgekühlter, mit einem Kondensatabscheider versehener Nachkühler im Druckluftstrom angeordnet ist, um die verdichtete Luft von der Verdichtungstemperatur am Nachkühlereintritt auf eine Temperatur von etwa 10° C über Ansaugtemperatur abzukühlen, und daß im Nachkühler ein Wärmetauscher zum Nachwärmen der Druckluft vorgesehen ist, der auf der Abluftseite im Abgasbereich des Antriebsaggregats angeordnet ist.

Mit der erfindungsgemäßen Lösung wird also ein luftgekühlter, insbesondere fahrbarer Kompressor mit integrierter Druckluftaufbereitung vorgeschlagen, bei dem die durch die Komprimierung erwärmte Luft, bei einem modernen Schraubenverdichter auf etwa 60° C über Ansaugtemperatur, mit einem überdimensionierten Nachkühler auf eine Temperatur abgekühlt wird, die etwa 10 ° C über der Ansaugtemperatur liegt. Hierbei kondensiert ein erheblicher Teil des in der Luft vorhandenen Wasserdampfes aus und kann durch den Kondensatabscheider ausgeschieden werden. Mit dieser Maßnahme erfolgt eine Kondensatausscheidung von etwa 80 %; noch 20 % Wasserdampf befinden sich in der Druckluft, die bei weiterer Reduzierung der Drucklufttemperatur kondensieren und zu Betriebsstörungen führen könnten. Um dies zu vermeiden sieht die Erfindung die weitere Maßnahme vor, wonach dem Nachkühler ein Wärmetauscher zum Nachwärmen der Druckluft nachgeordnet ist, der auf der Abluftseite im Abgaskanal des Antriebsaggregates liegt. Hierdurch wird der Wärmeinhalt des Abgases des Antriebs aggregates unmittelbar ausgenutzt. Die Druckluft wird dabei in dem Wärmetauscher wieder auf etwa 60° C über Ansaugtemperatur erwärmt und folglich die relative Luftfeuchtigkeit erheblich, beispielsweise von etwa 70 % auf etwa 10 %, reduziert. Berücksichtigt man beispielsweise, daß ein 3/4 Zoll-Schlauch ein Durchsatzvermögen von 3 m³ /min, einen Temperaturverlust von 0,5° C/min, bezogen auf 20° C Außentemperatur, aufgrund von Abstrahlungswäre bestizt, so fällt bei einer Schlauchlänge von etwa 60 m kein Kondensat aus, so daß auch über diese Länge von dem erfindungsgemäßen Baukompressor "trockene" Luft geliefert werden kann. Mit dieser weiteren erfindungsgemäßen Maßnahme wird also vermieden, daß die in der Druckluft zunächst verbleibende Restluftfeuchte von 20 bis 25 % durch weiteren Wärmeverlust (wie er in Schlauchleitungen bzw. Druckbehältern auftreten kann) kondensiert. Durch das erfindungsgemäße Nachwärmen der Druckluft unter Ausnutzung der Wärme des Abgases des Antriebsgases ist es möglich, auf äußerst wirtschaftliche Weise relativ trockene Luft (abhängig vom Schlauchdurchmesser und der Schlauchlänge) zu erzeugen und Schäden innerhalb der Verbraucher zu vermeiden. Außerdem eignet sich ein erfindungsgemäßer Kompressor dadurch auch auf hervorragende Weise für den Winterbetrieb.

Kompressoren der erfindungsgemäßen Art verfügen, bedingt durch die notwendigen Schalldämpfungsmaßnahmen, insbesondere wenn sie dieselgetrieben sind, über relativ große Kühlluftmengen, die den jeweiligen Maschinenteilen, insbesondere dem Antriebsaggregat, z.B. dem Dieselmotor, und/oder dem Verdichter zugeführt werden. Dieser Kompressor ist daher ausreichend mit Zuluft-und Abluftschächten versehen. Bei einem erfindungsgemäßen luftgekühlten Kompressor mit einer Kühlluftführung für das Antriebsaggregat und/oder den Verdichter, welcher eine Zuluft-und eine Abluftseite aufweist, besteht daher ein weiteres Erfindungsmerkmal darin, daß der luftgekühlte Nachkühler in einem Kühlluftschacht der Zuluftseite angeordnet ist. Hierdurch wird die Wirtschaftlichkeit des Kompressors noch weiter wesentlich erhöht. Durch leichte Veränderung der Verkleidung des Kompressors gegenüber herkömmlichen Kompressoren kann der luftgekühlte Nachkühler samt Kondensatabscheider in dem ohnehin vorhandenen Kühlluftschacht untergebracht werden.

Bei einer besonders zweckmäßigen Ausgestaltung der Erfindung ist vorgesehen, daß der Kondensatabscheider Luftleitbleche aufweist, die insbesondere in einem Kopfteil angebracht sind, um den Druckluftstrom in eine rotierende Bewegung zu versetzen. Aufgrund der veschiedenen spezifischen Gewichte sammeln sich die Wasser- bzw. Kondensattropfen an der Innenwand des Abscheiders und fließen von dort nach unten in einen Kondensatsammler, der zweckmäßig mit einer automatischen Schwimmerschaltung versehen ist, die je nach Kondensatstand, öffnet und über eine Schlauchleitung das Kondensat nach außen abführt.

Ferner kann gemäß einer weiteren vorteilhaften Ausgestaltung der Erfindung ein zusätzliches, insbesondere federbelastetes Ventil vorgesehen sein, das bei jedem Regelvorgang des Verdichters öffnet, um anstehendes Kondensat im Kühler-bzw. Rohrleitungssystem auszublasen. Hierdurch wird ein Einfrieren verhindert.

Ein weiteres Erfindungsmerkmal besteht darin, daß direkt nach dem Nachkühler bzw. dem Kondensatabscheider ein Anschlußhahn für einen Atemluftschlauch angeordnet ist. Diese Maßnahme ist insbesondere von Bedeutung, wenn der Kompressor für das Sandstrahlen od. dgl. staubbildende Arbeiten eingesetzt wird, wobei der Arbeiter eine Atemschutzmaske trägt. Durch diese erfindungsgemäße Maßnahme erhält der Arbeiter saubere und gekühlte Luft. Ein Aktivkohlefilter kann leicht angebracht werden, um die ohnehin geringen Ölspuren, maximal 10 mg/m³, gänzliche auszufiltern.

Um die Staubanteile in der angesaugten Luft möglichst gering zu halten, wird zweckmäßig die Verdichtungs-und Verbrennungsluft der Atmosphäre entnommen und nicht dem Innenraum der Kompressoranlage. Dazu ist es vorteilhaft, den Ansaugfilter von Innenraum der Anlage möglichst weit nach oben zu verlegen.

Eine weitere Ausnutzung der Abgaswärme wird nach einer besonders vorteilhaften Ausführungsform der Erfindung dadurch erreicht, daß der Wärmetauscher einen Anschluß aufweist, der mit einem Auspuffsystem eines Verbrennungsmotors verbunden ist. Hierdurch ist in sehr einfacher und dennoch äußerst wirkungsvoller Weise eine ganz erhebliche Verbesserung der Wärmeausbeute erzielt. Dabei wird die Abgaswärme des Verbrennungsmotors in optimaler Weise benutzt, um Druckluft zu erwärmen und so die Restfeuchte zu binden. Nach kurzer Betriebszeit des Verbrennungsmotors wird im Wärmetauscher entsprechend der Abgastemperatur eine Temperatur von etwa 350 bis 520°C wirksam. Dadurch ist eine Drucklufttemperatur von über 100°C zu erzielen.

Der Wärmetauscher kann nach der Erfindung als Rohrbündelwärmetauscher ausgeführt sein.

Eine andere vorteilhafte Ausführungsform der Erfindung sieht vor, daß der Wärmetauscher ein Kreuzstrom-Wärmetauscher · ist. Mit derartigen Kreuzstrom-Wärmetauschern läßt sich bei baulich relativ geringem Aufwand eine optimale Wärmeausbeute erzielen.

Insbesondere weist dieser Wärmetauscher von Wärmetauscherrohren freie Strömkammer bzw. Ausströmkammer und eine zwischen diesen angeordnete Querstromkammer auf.

Eine baulich besonders einfache und wenig Raum beanspruchende Ausführungsform sieht vor, daß der Wärmetauscher eine zylindrische Gestalt aufweist. Hierbei sind die Druckluftanschlüsse insbesondere am zylindrischen Umfang des Wärmetauschers vorgesehen.

Die Dimensionierung des Außenrohres des Wärmetauschers und der Druckluftanschlüsse, sowie der freie Durchgangsquerschnitt innerhalb der Querstromkammer ist zweckmäßig so gewählt, daß der maximale Druckwiderstand im Bereich von 0,7 bar liegt.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen und deren Rückbeziehung.

Es zeigen:

Fig. 1 einen erfindungsgemäßen luftgekühlten fahrbaren Kompressor in Schrägansicht;

Fig. 2 schematisch den Aufbau eines die Erfindung aufweisenden Kompressors;

Fig. 3 einen Längsschnitt durch einen erfindungsgemäßen Wärmetauscher und

Fig. 4 einen Querschnitt durch den Wärmetauscher gemäß Fig. 3 entlang der Linie A-A.

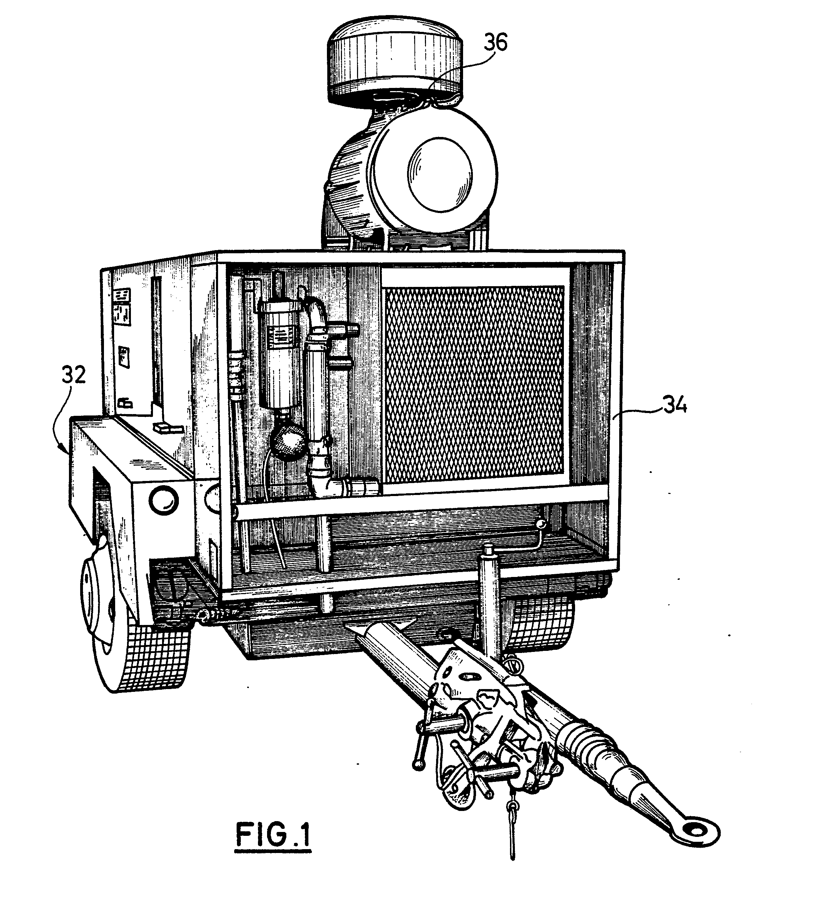

Fig. 1 zeigt einen luftgekühlten, fahrbaren, superschallgedämpften Schraubenkompressor, welcher von einem Dieselmotor als Antriebsaggregat angetrieben wird. Der fahrbare Kompressor ist auf einem einachsigen Fahrgestell 32 angeordnet. Auf dem Fahrgestell 32 befinden sich ein kastenförmige Aufbau 34, welcher eine luftgekühlten Dieselmotor und einen ölgekühlten Schraubenverdichter aufnimmt. Der vordere Teil des Aufbaus 34 bildet einen Zuluftschacht, in welchem ein luftgekühlter Nachkühler 24 samt Kondensatabscheider und automatischem Kondensatablaß angeordnet ist. Gleichfalls im vorderen Bereich des Aufbaus 34 ist soweit wie möglich oben außerhalb des Aufbaus 34 ein Ansaugfilter 36 angeordnet. Durch diese spezielle Anordnung außerhalb des Innenraums der Anlage wird die Verdichtungs-und Verbrennungsluft der Atmosphäre entnommen und nicht dem Innenraum. Die Verdichtungs-und Verbrennungstemperaturen sind dadurch um etwa 5°C niedriger und der Kühlluftstrom ist größer. Auch ergeben sich geringere Staubanteile der atmosphärischen Luft, weil der Ansaugort nach oben verlegt ist. Der Druckluftstrom wird durch Luftleitbleche, die im Kopfteil des Kondensatabscheiders ange bracht sind, in eine rotierende Bewegung gebracht. Aufgrund der unterschiedlichen spezifischen Gewichte sammeln sich die Kondensattropfen an der Innenwand des Kondensatabscheiders und fließen von dort nach unten in einen Kondensatsammler, der je nach Kondensatstand durch eine automatische Schwimmerschaltung öffnet und über eine Schlauchleitung das Kondensat nach außen abführt. Ein zusätzliches federbelastetes Auslaßventil öffnet bei jedem Regelvorgang des Verdichters, um anstehendes Kondensat im Kühler bzw. Rohrleitungssystem auszulassen. Direkt nach dem Nachkühler-und Ausscheidesystem ist ein Anschlußhahn für einen Atemluftschlauch vorgesehen, mit welchem einem Arbeiter, z.B. beim Sandstrahlen, saubere und gekühlte Atemluft zugeführt werden kann. Die Druckluft wird dann über einen Wärmetauscher geführt, der im Abgasbereich des Antriebsaggregats, insbesondere eines Dieselmotors, angeordnet ist. Die Druckluft wird in dem beispielsweise als Rohrbündelwärmetauscher ausgebildeten Wärmetauscher z.B. auf etwa 60° C über Ausgangstemperatur erwärmt. Die relative Luftfeuchtigkeit wird damit von etwa 70 % auf etwa 10 % reduziert. Es ergeben sich dadurch folgender Zustandsgrößen der Luft:

Vor dem Ansaugfilter:

Außentemperatur + 20° C
Barometerstand 760 mmHg
relative Luftfeuchtigkeit 70%
absolute Feuchte 17 g/m³

am Entnahmehahn

Drucklufttemperatur + 80° C,
Betriebsdruck 7 bar
relative Luftfeuchtigkeit 10,3 %
absolute Feuchte 3,4 g/m³.

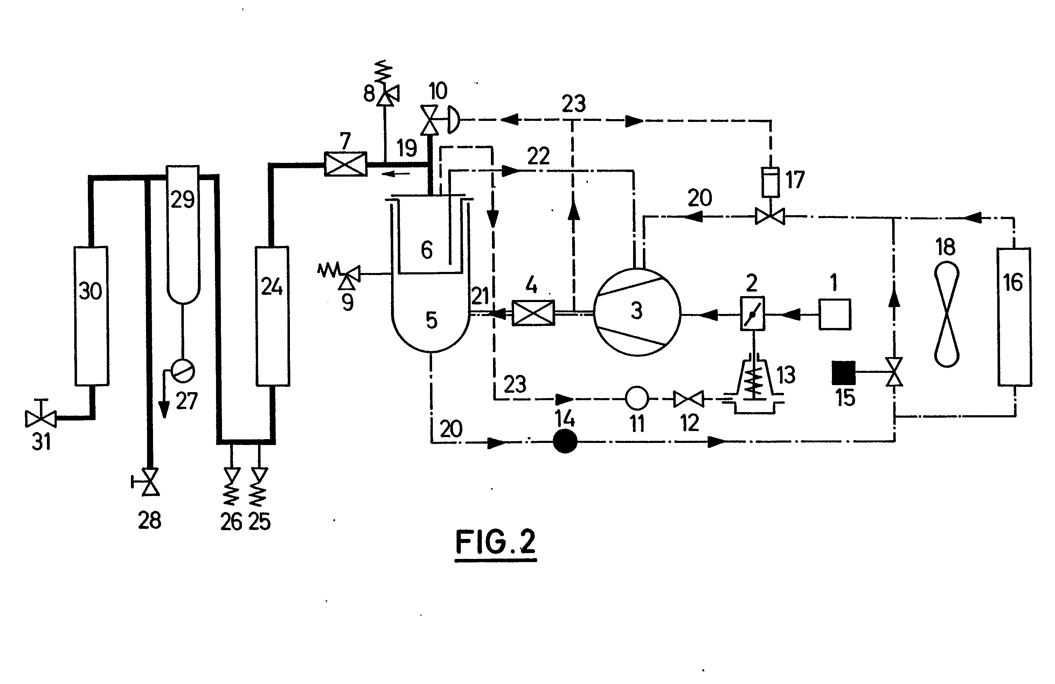

Aus dem Schema der Fig. 2 in Verbindung mit der nachfolgenden Bezugszeichenliste ergibt sich der konkrete Aufbau eines erfindungsgemäßen luftgekühlten Kompressors. Die Luft wird über ein Luftfilter 1 angesaugt und dem Verdichter 3 zugeführt. In der Verbindungsleitung zwischen Luftfilter 1 und Verdichter 3 befindet sich eine Drosselklappe 2 mit Stellzylinder 13. In der Öl-Luft-Leitung 21 zwischen Verdichter 3 und Ölbehälter 5 mit Ölfeinabscheider 6 befindet sich ein Rückschlagventil 4. Die Luftleitung 19, an welche ein Druckbegrenzungsventil 8 angeschlossen ist, führt von dem Ölfeinabscheider 6 über ein Rückschlag- und Druckhalteventil 7 zu dem Nachkühler 24. Dem Nachkühler 24 folgt der Kondensatabscheider 29. An der untersten Stelle der Verbindungsleitung beider Aggregate 24, 29 ist ein Regel-Auslaßventil 25 und ein Aussetz-Abblaseventil 26 angeordnet, die jeweils bei Regelung des Verdichters 3 bzw. beim Aussetzen öffnen und für ein Ablassen des Kondensats sorgen, um Einfrierungen zu vermeiden. Das sich aufgrund des Kondensatabscheiders 29 sammelnde Kondensat wird nach unten über einen automatischen Kondensatablaß 27 abgelassen. Unmittelbar nach dem Kondensatabscheider 29 ist an die Druckluftleitung ein Atemluft-Anschlußhahn 28 angeschlossen. Die Druckluftleitung selbst führt durch einen Wärmetauscher 30 zu dem Anschlußhahn 31 für den Anschluß des druckluftbetriebenen Werkzeugs od. dgl. An den Ölbehälter 5 ist ein Sicherheitsventil 9 angeschlossen. Das für die Kühlung des Verdichters 3 bestimmte Öl des Ölbehälters 5 wird über die Ölleitung 20 und einen Ölfilter 14 durch einen Ölkühler 16 geführt, welcher von einem Lüfter 18 beaufschlagt wird. In einem Bypass zum Ölkühler 16 liegt ein von einem Thermostat 15 gesteuertes Regelventil. In der Ölleitung 20 zwischen Ölkühler 16 und Verdichter 3 liegt ein Öldruckhalteventil 17, welches über eine Steuerleitung 23 angesteuert wird, welche von der Verbindungsleitung zwischen Verdichter 3 und Rückschlagventil 4 abzweigt. Die Steuerleitung 23 führt auch zu einem Abblaseventil 10 in der Luftleitung 19 unmittelbar nach dem Ölfeinabscheider 6. Von dem Ölfeinabscheider 6 führt ferner eine Steuerleitung 23 über einen Filter und Wasserabscheider 11 und ein Regelventil 12 zu dem Stellzylinder 13. Der Ölfeinabscheider 6 ist ferner über eine Ölabsaugleitung 22 mit dem Verdichter 3 verbunden.

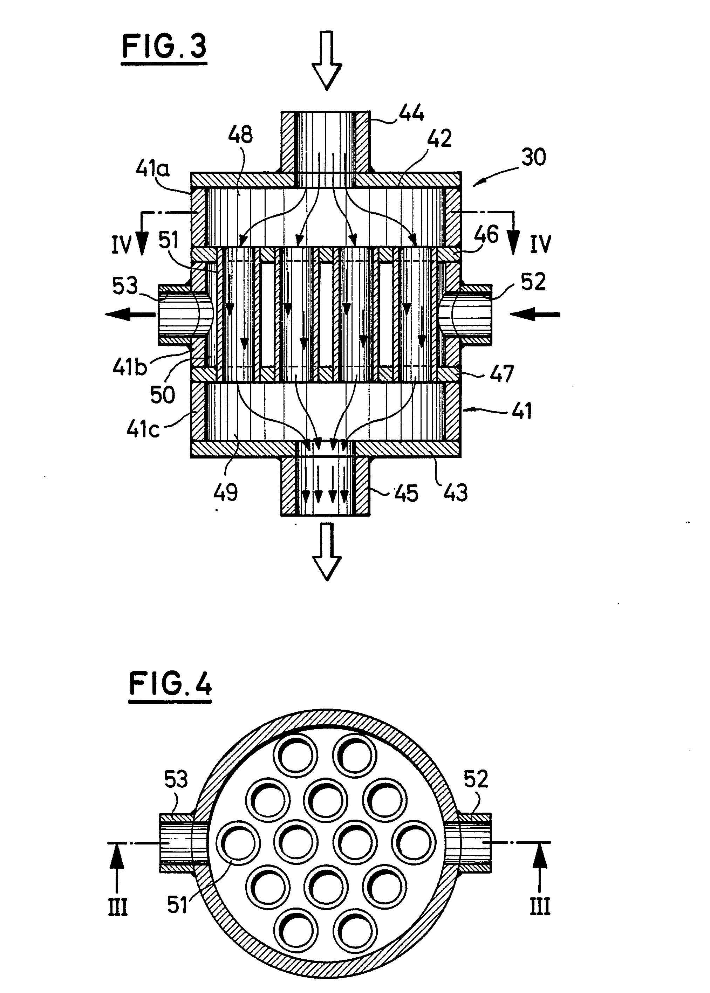

Es wird sodann auf die Figuren 3 und 4 Bezug genommen, die den Wärmetauscher 30 im Detail zeigen. Der Wärmetauscher 30 weist ein rohrförmiges Gehäuse 41 auf, welches mittels eines oberen Deckels 42 und eines unteren Deckels 43 verschlossen ist. Das rohrförmige Gehäuse 41 besteht hierbei aus drei rohrförmigen Abschnitten 41a, 41b, 41c. Die Deckel 42, 43 sind jeweils mit Anschlußstutzen 44, 45 versehen. Im mittleren Bereich des Gehäuseinneren sind zwei Zwischenwände 46, 47 eingezogen, so daß oberhalb der oberen Zwischenwand eine Einströmkammer 48 und unterhalb der unteren Zwischenwand 47 eine Ausströmkammer 49 gebildet wird. Zwischen den Zwischenwänden 46, 47 erstreckt sich eine Querstromkammer 50. In der Querstromkammer 50 sind parallel zur Längsachse des Wärmetauschers 30 mit Abstand voneinander angeordnete Wärmetauscherrohre angeordnet, von denen eines mit 51 bezeichnet ist. Die Wärmetauscherrohre 51 sind in Öffnungen eingesetzt, die in den Zwischenwänden 46, 47 vorgesehen und fluchtend angeordnet sind. Die Enden der Wärmetauscherrohre 51 schließen hierbei bündig mit dem Zwischenwänden 46, 47 ab. Im Bereich der Querstromkammer 50 sind am rohrförmigen Teil des Gehäuses 41 außen Anschlußstutzen 52, 53 vorgesehen, über die die Druckluft zu-bzw. abgeführt wird. Der ganze Wärmetauscher 30 ist als Schweißkonstruktion unter Verwendung einfacher rohrförmiger Teile ausgeführt.

Die Anschlußstutzen 44, 45 (Durchmesser d) sowie die Einströmkammern 48, 49 und die Wärmetauscherrohre 51 und deren Anzahl sind so dimensioniert, daß der zulässige Abgasdruck der jeweiligen Motorenfabrikate nicht überschritten wird. Die Dimensionierung des rohrförmigen Gehäuseteiles 40 (Durchmesser D) und der Anschlußstutzen 52, 53 für die .Druckluft sowie der freie Durchgangsquerschnitt innerhalb der Querstromkammer 50 ist so gewählt, daß der maximale Druckwiderstand etwa 0,7 bar beträgt.

Bezugszeichenliste:

1 Luftfilter
2 Drosselklappe
3 Verdichter
4 Rückschlagventil
5 Ölbehälter
6 Ölfeinabscheider
7 Rückschlag-und Druckhalteventil
8 Druckbegrenzungsventil
9 Sicherheitsventil
10 Abblaseventil
11 Filter und Wasserabscheider
12 Regelventil
13 Stellzylinder
14 Ölfilter
15 Thermostat
16 Ölkühler
17 Ölrückhalteventil
18 Lüfter
19 Luftleitung
20 Ölleitung
21 Öl-Luft-Leitung
22 Ölabsaugleitung
23 Steuerleitung
24 Nachkühler
25 Regel-Auslaßventil
26 Aussetz-Abblaseventil
27 automatischer Kondensatablaß
28 Atemluft-Anschlußhahn
29 Kondensatabscheider
30 Wärmetauscher
41 Gehäuse
42 Deckel
43 Deckel
44 Anschlußstutzen
45 Anschlußstutzen
46 Zwischenwand
47 Zwischenwand
48 Einströmkammer
49 Ausströmkammer
50 Querstromkammer
51 Wärmetauscherrohr
52 Anschlußstutzen
53 Anschlußstutzen

## Ansprüche

1. Luftgekühlter, insebsondere fahrbarer Kompressor mit integrierter Druckluftaufbereitung, mit einem Verdichter (3), insbesondere einem Schraubenverdichter, und mit einem Antriebsaggregat, insbesondere einem Dieselmotor für den Verdichter (3), dadurch gekennzeichnet, daß ein luftgekühlter, mit einem Kondensatabscheider (29) versehener Nachkühler (24) im Druckluftstrom angeordnet ist, um die Druckluft von der Verdichtungsendtemperatur am Nachkühlereintritt auf eine Temperatur von etwa 10° C über Ansaugtemperatur abzukühlen, und daß dem Nachkühler (24) ein Wärmetauscher (30) zum Nachwärmen der Druckluft nachgeordnet ist, der auf der Abluftseite im Abgasbereich des Antriebsaggregates liegt.

2. Luftgekühlter Kompressor nach Anspruch 1, mit einer Kühlluftführung für das Antriebsaggregat und/oder den Verdichter, welche eine Zuluft-und eine Abluftseite aufweist, dadurch gekennzeichnet, daß der luftgekühlte Nachkühler (24) in einem Kühlluftschacht der Zuluftseite angeordnet ist.

3. Luftgekühlter Kompressor nach Anspruch 1 oder 2, dadurch gekennzeichnet, daß der Nachkühler (24) ein Kreuzstrom-Kühler ist.

4. Luftgekühlter Kompressor nach einem der Ansprüche 1 bis 3, dadurch gekennzeichnet, daß der Kondensatabscheider (29) Luftleitbleche aufweist, die insbesondere in einem Kopfteil angeordnet sind, um den Druckluftstrom in eine rotierende Bewegung zu versetzen.

5. Luftgekühlter Kompressor nach einem der Ansprüche 1 bis 4, dadurch gekennzeichnet, daß der Kondensatabscheider (29) einen automatischen Kondensatablaß (27) aufweist.

6. Luftgekühlter Kompressor nach einem der Ansprüche 1 bis 5, dadurch gekennzeichnet, daß der Kondensatabscheider (29) ein Ventil (25) aufweist, das bei jedem Regelvorgang des Verdichters (3) öffnet, um im Nachkühler (24) bzw. Rohrleitungssystem anstehendes Kondensat abzulassen.

7. Luftgekühlter Kompressor nach einem der Ansprüche 1 bis 6, dadurch gekennzeichnet, daß unmittelbar nach dem Nachkühler (24) bzw. dem Kondensatabscheider (29) ein Anschlußhahn (28) für einen Atemluftschlauch angeordnet ist.

8. Luftgekühlter Kompressor nach einem der Ansprüche 1 bis 7, dadurch gekennzeichnet, daß der Wärmetauscher (30) einen Anschluß (44) aufweist, der mit einem Auspuffsystem eines Verbrennungsmotors verbunden ist.

9. Luftgekühlter Kompressor nach einem der Ansprüche 1 bis 8, dadurch gekennzeichnet, daß der Wärmetauscher (30) ein Rohrbündelwärmetauscher ist.

10. Luftgekühlter Kompressor nach einem der Ansprüche 1 bis 8, dadurch gekennzeichnet, daß der Wärmetauscher (30) ein Kreuzstrom-Wärmetauscher ist.

11. Luftgekühlter Kompressor nach Anspruch 10, dadurch gekennzeichnet, daß der Wärmetauscher (30) eine Einströmkammer (48), eine Ausströmkammer (49) und eine dazwischen angeordnete Querstromkammer (50) aufweist.

12. Luftgekühlter Kompressor nach einem der vorhergehenden Ansprüche, dadurch gekennzeichnet, daß der Wärmetauscher (30) eine zylindrische Gestalt aufweist.

13. Luftgekühlter Kompressor nach Anspruch 12, dadurch gekennzeichnet, daß am zylindrischen Umfang des Wärmetauschers (30) Druckluftanschlüsse (52, 53) vorgesehen sind.

14. Luftgekühlter Kompressor nach einem der Ansprüche 11 bis 13, dadurch gekennzeichnet, daß die Dimensionierung des Gehäuses (41) und der Druckluftanschlüsse (52, 53) sowie der freie Durchgangsquerschnitt innerhalb der Querstromkammer (50) so gewählt ist, daß der maximale Druckwiderstand im Bereich von 0,7 bar liegt.

15. Luftgekühlter Kompressor nach einem der Ansprüche 11 bis 14, dadurch gekennzeichnet, daß die Anschlußstutzen (44, 45) sowie die Einströmkammer (48) und die Ausströmkammer (49) und die Wärmetauscherrohre (51) bzw. deren Zahl so dimensioniert sind, daß der zulässige Abgasgegendruck des Verbrennungsmotors nicht überschritten wird.

**FIG.1**

FIG.2

0 230 940

## FIG.3

## FIG.4